# EUROPEAN PATENT APPLICATION

(11) **EP 4 450 694 A1**
(43) Date of publication of application: **23.10.2024**
(21) Application number: 22925069.1
(22) Date of filing: 15.06.2022
(51) Int. Cl.: D06F 34/05, D06F 34/18, G06N 20/00, D06F 105/58, D06F 105/60

(54) **METHOD AND DEVICE FOR GUIDING WASH CYCLES**

(30) Priority: 07.02.2022 KR 20220015712
(71) Applicant: LG Electronics Inc., Yeongdeungpo-gu Seoul 07336 (KR)
(72) Inventor: KIM, Sang Won, Seoul 08592 (KR); KIM, Tae Yoon, Seoul 08592 (KR); LEE, Jung Hyub, Seoul 08592 (KR); LEE, Taekyo, Seoul 08592 (KR)
(74) Representative: Ter Meer Steinmeister & Partner
(86) International application number: PCT/KR2022/008489
(87) International publication number: WO 2023/149602

(57) **Abstract**

The present invention relates a technique pertaining to a method and device for guiding wash cycles, and the method for guiding wash cycles according to an embodiment of the present invention comprises: a step in which a server communication unit of a management server receives, from a washer, data obtained by putting laundry thereinto and then performing a tumble motion to sense same; a step in which a server control unit of the management server determines if the laundry is functional clothing on the basis of the data; and a step in which the server control unit controls a guiding process of the washer by comparing information on a set cycle of the washer with the determination result.

## Description

### FIELD

The present disclosure is a technology related to a method and device for guiding a washing course.

### DESCRIPTION OF RELATED ART

Conventionally, there were not many different types of laundry that a washing apparatus washed, so that a user could easily set a type of the laundry. However, as the number of laundry types has recently increased, it has become necessary to set the type of the laundry to the washing apparatus in order to increase washing efficiency.

However, as the types of the laundry have become more diverse, it has become difficult for the user to determine the type of the laundry. Furthermore, there are many cases where washing of the laundry is performed in a standard setting without checking characteristics of the laundry.

Therefore, it is necessary to check characteristics of specific laundry in a process of setting a course of the washing apparatus, and perform the laundry washing based on the characteristics.

### DISCLOSURE

### TECHNICAL PURPOSE

A purpose of the present disclosure is to solve the above-mentioned problem and is to provide a management server configured to check a type of laundry and provide guide information about washing thereof.

A purpose of the present disclosure is to provide a scheme to check a type of laundry using data generated at a time point when the washing apparatus to which the laundry has been input operates and determine whether the type is suitable for a course set in the washing apparatus.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

### TECHNICAL SOLUTION

A method for guiding a washing course according to one embodiment of the present disclosure includes receiving, by a server communication unit of a management server, data from a washing apparatus, wherein after laundry is input to the washing apparatus, the washing apparatus performs a tumble-motion of the laundry to detect the data during the tumble-motion of the laundry; determining, by a server controller of the management server, whether the input laundry is functional clothing, based on the received data; comparing, by the server controller of the management server, set course information of the washing apparatus with the determination result; and controlling, by the server controller of the management server, a guide process for guiding the washing apparatus, based on the comparing result.

A management server for guiding a washing course according to one embodiment of the present disclosure includes a server communication unit configured to receive data from a washing apparatus, wherein after laundry is input to the washing apparatus, the washing apparatus performs a tumble-motion of the laundry to detect the data during the tumble-motion of the laundry; and a server controller configured to: determine whether the input laundry is functional clothing, based on the received data; compare set course information of the washing apparatus with the determination result; and control a guide process for guiding the washing apparatus, based on the comparing result.

### TECHNICAL EFFECT

According to the present disclosure, the management server checks the type of the laundry and provides the guide information based on the type of the laundry to the washing apparatus. Thus, the user of the washing apparatus may set a washing course appropriate for the type of the laundry.

Furthermore, according to the present disclosure, the server may identify the type of the laundry using the data generated at a time at which the washing apparatus into which the laundry is inserted performs its function and may determine whether the type of the laundry is suitable for the course set in the washing apparatus. Then, the washing apparatus may operate based on the determination result. Thus, the washing apparatus may perform the laundry washing while preventing the damage to the laundry.

The effects of the present disclosure are not limited to the effects described above, and those skilled in the art of the present disclosure may easily derive various effects of the present disclosure from a configuration of the present disclosure.

### BRIEF DESCRIPTION OF DRAWINGS

FIG. 1 is a diagram showing a process of determining a type of laundry input to the washing apparatus and recommending a course using a message according to an embodiment of the present disclosure.
FIG. 2 is a diagram showing a process and a configuration of apparatuses in which a management server creates a message for voice guidance and transmits the message to each apparatus according to another embodiment of the present disclosure.
FIG. 3 is a diagram showing a process of determining whether functional clothing has been input to the washing apparatus and providing guidance according to an embodiment of the present disclosure.
FIG. 4 is a block diagram showing a general configuration of a management server 300 according to an embodiment of the present disclosure.
FIG. 5 is a block diagram showing a general configuration of a user terminal according to an embodiment of the present disclosure.
FIG. 6 is a diagram showing a process in which the management server determines whether laundry input to the washing apparatus is the functional clothing according to an embodiment of the present disclosure.
FIG. 7 is a diagram showing a result obtained by a machine learning module of the management server performing machine learning according to one embodiment of the present disclosure.
FIG. 8 is a diagram showing a process in which the management server trains the machine learning module according to an embodiment of the present disclosure.
FIG. 9 is a diagram showing a point in time when the management server collects data according to one embodiment of the present disclosure.
FIG. 10 is a diagram showing a configuration in which a machine learning module of a server controller applies three classification schemes to produce an optimal result according to an embodiment of the present disclosure.
FIG. 11 is a diagram showing a process in which the management server changes a course setting of the washing apparatus according to an embodiment of the present disclosure.

### DETAILED DESCRIPTIONS

Hereinafter, with reference to the drawings, embodiments of the present disclosure will be described in detail so that those skilled in the art in the technical field to which the present disclosure belongs may easily implement the present disclosure. The present disclosure may be implemented in several different forms and is not limited to the embodiments described herein.

In order to clearly describe the present disclosure, parts not related to the description are omitted, and identical or similar elements are given the same reference sign throughout the present disclosure. Furthermore, some embodiments of the present disclosure are described in detail with reference to illustrative drawings. In adding reference numerals to components in the drawings, identical components may have the same reference numerals as much as possible even when they are shown in different drawings. Furthermore, when describing the present disclosure, when it is determined that a detailed description of a structure or a function well known to the skilled person to the art may obscure the gist of the present disclosure, the detailed description thereof may be omitted.

When describing the components of the present disclosure, terms such as first, second, A, B, a, and b may be used. These terms are only used to distinguish one component from another component, and the nature, sequence, order, or number of the component are not limited by the term. It should be understood that when a component is described as being "connected," "coupled," or "combined" to another component, the component may be directly connected, coupled, or combined to another component, still another component may be "interposed" therebetween, and thus the component may be connected, coupled, or combined to another component via the sill another component.

Furthermore, when implementing the present disclosure, a component may be subdivided into sub-components for convenience of description. However, components may be integrated into a single apparatus or module. One component may be distributed in multiple apparatuses or modules.

Hereinafter, a scheme for identifying clothing when the functional clothing is input to a washing apparatus is described. In particular, according to an embodiment of the present disclosure, the washing apparatus or the server determines whether the functional clothing has been input to the washing apparatus when the user sets a standard course without setting a separate course suitable for laundry.

The functional clothing refers to laundry determined as special laundry by the washing apparatus. For example, when the washing apparatus provides separate washing courses such as "wool washing," "lingerie washing," "outdoor washing," and "blanket washing," all of laundry that are required be washed in these separate washing courses are defined as the functional clothing. Further, the functional clothing may be further classified into first functional clothing, second functional clothing, etc. depending on a type thereof.

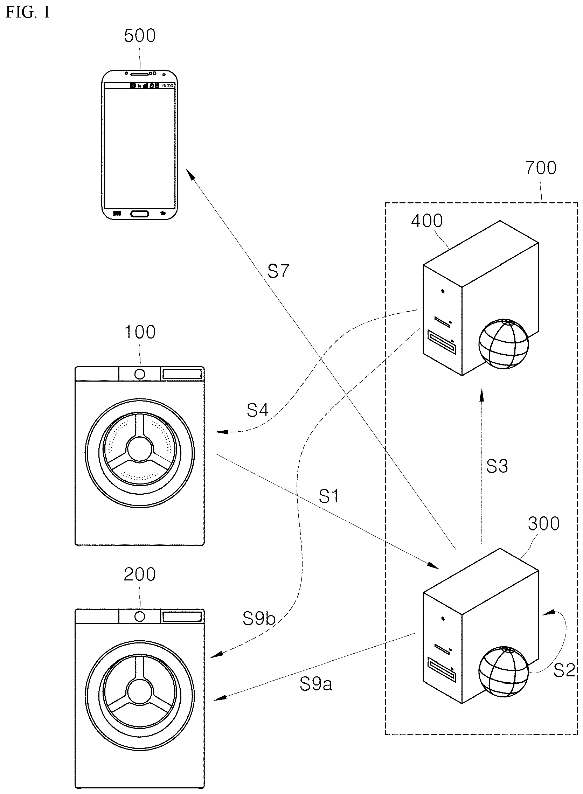

FIG. 1 is a diagram showing a process of determining a type of laundry input to the washing apparatus and recommending a course using a message according to an embodiment of the present disclosure.

Each of a washing apparatus 100 and a drying apparatus 200 communicates with a management server 300.

After the laundry has been input to the washing apparatus 100, the washing apparatus 100 performs a tumble-motion to rotate a washing tub to which the laundry has been input in an initial startup process to wash the input laundry. At this time, the washing apparatus 100 may be set to a standard course.

In one embodiment, while the washing apparatus 100 performs the tumble motion, the washing apparatus 100 calculates at least one of tumble-motion starting current data, tumble-motion maintaining current average data, and tumble-motion maintaining current variance data and transmits the at least one to the management server 300 in S 1.

In another embodiment of S1, the washing apparatus 100 may transmit a captured image of laundry input to the washing tub and weight information of the laundry to the management server 300.

The management server 300 determines, based on the data received in S 1, whether the laundry loaded into the washing apparatus 100 is the functional clothing in S2. When it is determined that the laundry is the functional clothing, the management server 300 creates a notification message to be informed to the user of the washing apparatus 100 in S2.

The management server 300 may control a sound source server 400 so that a voice message including information (guide information) informing the user that the input laundry is the functional clothing may be output from the washing apparatus 100 in S3.

In addition, the management server 300 may transmit information to be notified to the user as a pushing message to the user terminal 500 in S7. In this regard, the user terminal 500 is a terminal owned by a user who owns or uses the washing apparatus 100 and the drying apparatus 200. The user terminal 500 is linked to the washing apparatus 100 and the drying apparatus 200 via the management server 300.

The sound source server 400 transmits a product voice notification sound source to the washing apparatus 100 in S4. The user may check the sound source output from the washing apparatus 100.

The above process may be applied to the drying apparatus 200.

Furthermore, when the management server 300 has determined that the laundry inputted into the washing apparatus 100 is the functional clothing, the server 300 transmits information about the functional clothing to the corresponding drying apparatus 200 in S9a, such that the drying apparatus 200 provides a drying course suitable for the functional clothing.

In another embodiment, when the washing apparatus 100 has finished the washing, the washing apparatus 100 may notify the management server 300 of the end of the washing. Then, the sound source server 400 may notify the drying apparatus 200 to start the drying of the functional clothing in a voice manner in S9b.

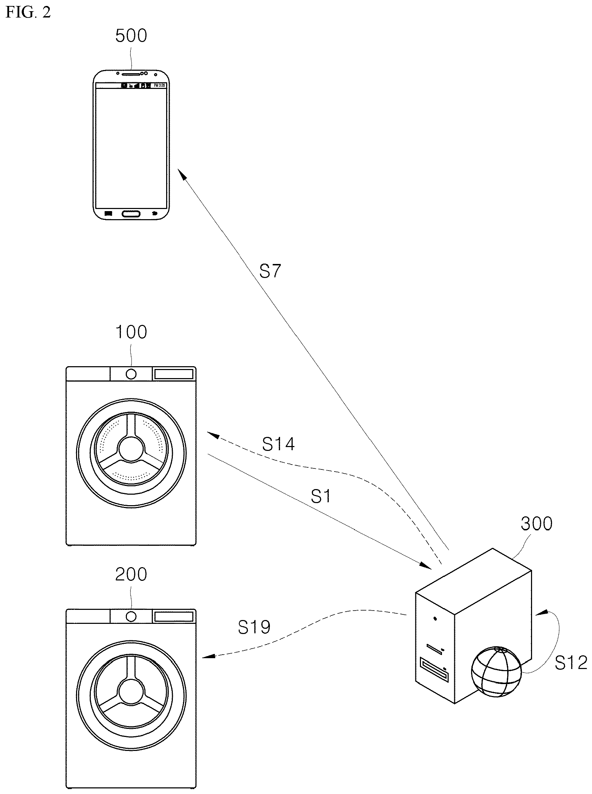

FIG. 2 is a diagram showing a process and a configuration of apparatuses in which a management server creates a message for voice guidance and transmits the message to each apparatus according to another embodiment of the present disclosure.

S1 and S7 are the same as those in FIG. 1 as described above. Thus, the description of FIG. 1 is applied thereto.

The management server 300 determines whether the laundry inputted into the washing apparatus 100 is the functional clothing based on the results of analyzing the data received in S 1 in S12. Then, when the determination result is that the laundry is the functional clothing, the management server 300 creates a notification message for voice guidance so that the washing apparatus 100 outputs the voice message including information (guide information) informing the user that the laundry contains the functional clothing in S12.

Then, the management server 300 transmits the notification message to the washing apparatus 100 and the drying apparatus 200 in S 14.

The above process may be applied to the drying apparatus 200.

Furthermore, when the management server 300 has determined that the laundry input to the washing apparatus 100 is the functional clothing, the management server 300 transmits the information (notification message) about the functional clothing to the corresponding drying apparatus 200 in S19, so that the drying apparatus 200 may provide a drying course suitable for the functional clothing. In this process, the information transmitted in S 19 may include a message that may instruct the drying apparatus to start the drying of the functional clothing in the voice manner in S 19.

As in FIG. 1, the server 300 sends a pushing message to an application of the user terminal 500 in S7 so that the user may check the pushing message. The pushing message also belongs to a notification message. In some examples, the pushing message is provided in a text manner or a voice manner.

The notification message may be one of 1) a message composed of a text or 2) a message including a sound source. When the notification message is a text message, the washing apparatus 100 and the drying apparatus 200 having received the text message may convert the text message into a sound source using an internal user interface and output the sound source, or may output the text of the text message on a display.

When the notification message includes the sound source file, the washing apparatus 100 and the drying apparatus 200 having received the sound source file may output the sound source using the internal user interface. The notification message may further include instructions that control an operation of the washing apparatus 100 or the drying apparatus 200. For example, the notification message may include the instructions instructing to change the set course (standard clothing washing/drying, etc.) of the washing apparatus 100 or the drying apparatus 200.

The embodiments of FIGS. 1 and 2 are summarized as follows.

When the functional clothing is put to the washing tub after the standard course has been set to the washing apparatus, the server determines that the functional clothing is put to the washing tube in a state in which the standard course has been set to the washing apparatus. Thus, the server guides a customer to set or use a functional clothing course. In this case, a customized course may be provided to the customer. In this process, a product voice notification or the pushing message may be constructed based on the behavioral characteristics of each customer.

To determine whether the laundry input to the washing tub is the functional clothing, the washing apparatus transmits the tumble-motion starting current data, the tumble-motion maintaining current average data, the tumble-motion maintaining current variance data, etc. to the management server 300. Alternatively, the washing apparatus 100 may transmit the photographed image of the laundry input to the washing tub and weight information of the laundry to the management server 300.

The management server 300 may apply a binary classification model to the received data to determine whether the laundry input to the washing tub is the functional clothing. When it is determined that the laundry is the functional clothing, the management server 300 and the sound source server 400 provide a service guiding the setting of the functional clothing course to the user, thereby preventing damage to the laundry.

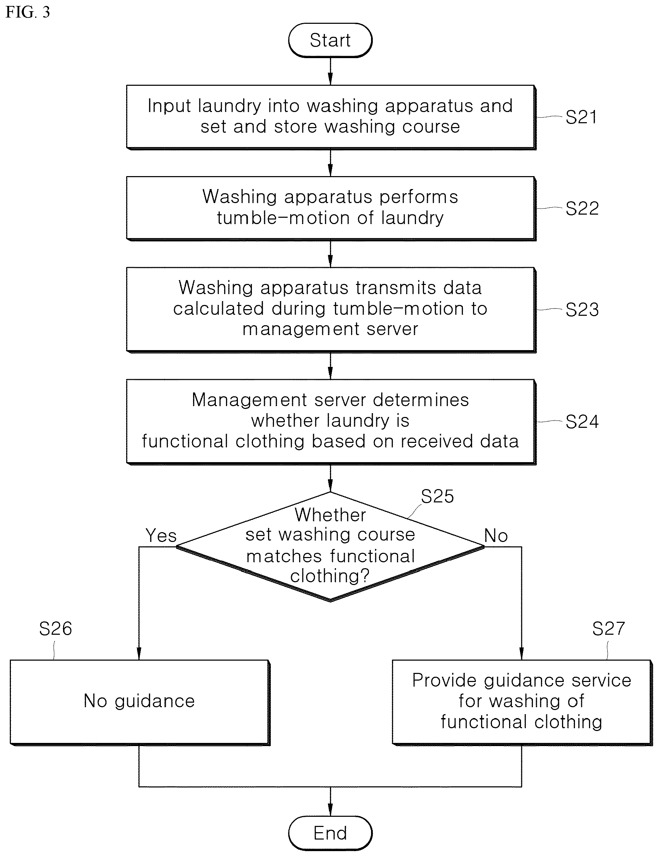

FIG. 3 is a diagram showing a process of determining whether functional clothing has been input to the washing apparatus and providing guidance according to an embodiment of the present disclosure.

When the laundry is inserted into the washing apparatus and a washing course is set, the washing apparatus stores therein the set washing course in S21. The washing apparatus may store the set washing course therein, and may transmit the stored washing course information to the management server 300. Afterwards, the washing apparatus performs the tumble-motion in S22. Then, the washing apparatus transmits the data (the tumble-motion starting current data, the tumble-motion maintaining current average data, the tumble-motion maintaining current variance data, etc.) calculated during the tumble-motion process to the management server 300 in S23. When the information about the washing course setting has not been transmitted to the server 300 in S21, the washing apparatus may transmit the information about the washing course setting along with the calculated data to the management server 300 in S23.

In another embodiment of S23, the washing apparatus 100 may transmit the photographed image of the laundry input to the washing tub and the weight information of the laundry to the management server 300.

The management server 300 determines, based on the received data, whether the laundry input into the washing tub is the functional clothing in S24. When, based on a result of the determination, the laundry input into the washing tub is the functional clothing, and further, when it is determined that the set washing course does not match the functional clothing washing course in S25, the management server 300 provides a guidance service to the customer to guide the setting of the functional clothing course in S27. When i) the input laundry is not the functional clothing, or ii) the set washing course matches the functional clothing washing course, the management server 300 does not provide separate guidance in S26.

In one embodiment, when it is determined that the input laundry is the functional clothing after the standard course has been set to the washing apparatus 100, the management server 300 may guide the customer to set or use the functional clothing course.

According to the above-described embodiment, when the laundry inputted to the washing apparatus is the functional clothing and the set washing course setting is not suitable for the functional clothing, the washing apparatus 100 provides a service guiding the setting of the functional clothing course, thereby preventing damage to the laundry.

According to the embodiment of FIG. 3, the user sets the washing course of the washing apparatus to the standard course and then inputs the laundry thereto. However, the management server 300 determines that the input laundry is the functional clothing. In this case, the server may guide the customer to change the standard washing course to the functional clothing course. For example, the management server 300 may allow the washing apparatus 100 to output a voice message saying "Customer, aren't you trying to wash the functional clothing after setting the standard course? Please washing the functional clothing using the functional clothing course" so that the user may change the washing course to the functional clothing course.

The functional clothing may be classified in various ways. Therefore, when a type of the functional clothing is determined to be lingerie, wool, blanket, etc., the washing apparatus 100 may recommend a lingerie washing course, a wool washing course, a blanket washing course, etc.

In the above-described embodiment, an application pushing message and a product voice guidance comment are used as means for providing the guidance service. However, other user interface schemes may also be used. For example, the washing apparatus 100 may output a buzzer sound to alert the user to change the washing course.

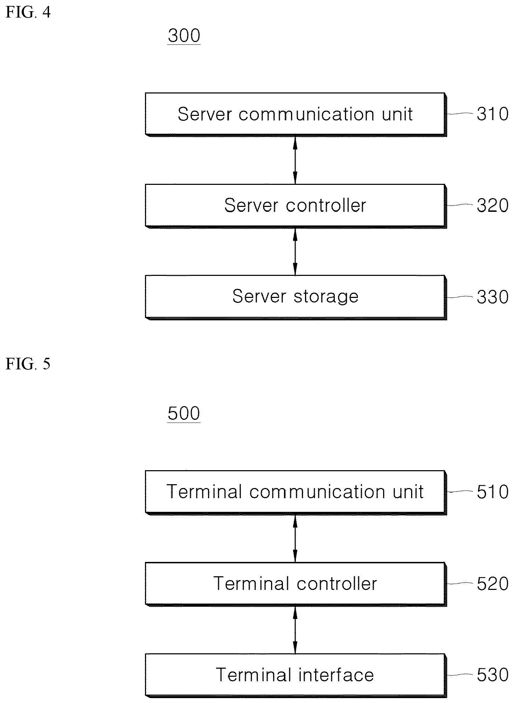

FIG. 4 is a block diagram showing a general configuration of the management server 300 according to an embodiment of the present disclosure. The management server 300 may be abbreviated as server.

Referring to FIG. 4, the management server 300 may include a server communication unit 310, a server controller 320, and a server storage 333.

The server communication unit 310 may communicate with the washing apparatus 100, the drying apparatus 200, and the user terminal 500. The server communication unit 310 may perform communication in a wired scheme and/or a wireless scheme. The wireless scheme may include a short-range wireless communication scheme and a long-distance wireless communication scheme.

The server controller 320 may control the server communication unit 310 and the server storage 330.

Although not shown in the drawing, the server controller 320 may include a processor and an internal memory. The internal memory may store therein a server application for managing the washing apparatus 100, and the drying apparatus 200. The processor may execute the server application.

The server storage 330 may be a volatile and/or non-volatile memory, and may store therein the message transmitted from the washing apparatus 100, the drying apparatus 200, etc. The message includes a function, a washing course and a drying course as performed by each of the washing apparatus 100 and the drying apparatus 200, and data sensed by the washing apparatus 100 during the tumble motion. Furthermore, information about an error or an abnormal state that occurs during the performance of each function may also be included in the above-described message.

Furthermore, the message transmitted from the washing apparatus 100, the drying apparatus 200, etc. includes identification information of each of the washing apparatus 100 and the drying apparatus 200.

Furthermore, the washing apparatus 100 may calculate a change or an average value of current during the tumble-motion and transmit the calculated change or average value to the management server 300. In this case, the server storage 330 may store the tumble-motion starting current data, the tumble-motion maintaining current average data, the tumble-motion maintaining current variance data, etc.

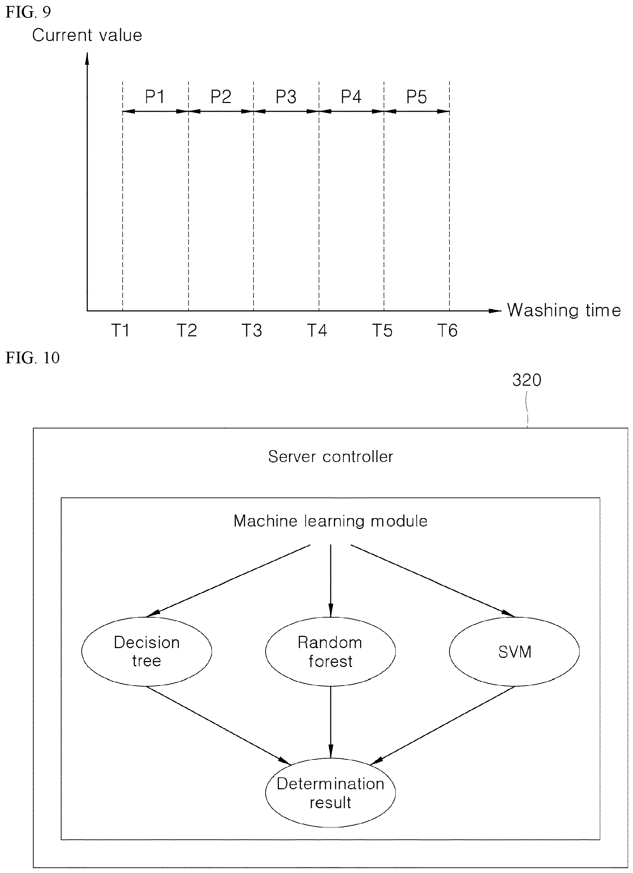

The server controller 320 determines whether the laundry input into the washing tub is the functional clothing based on the tumble-motion starting current data, the tumble-motion maintaining current average data, the tumble-motion maintaining current variance data, etc. which have been transmitted from the washing apparatus. Furthermore, in one embodiment, the data may be calculated based on measurements at two or more time points or for two or more time periods when the washing apparatus performs the tumble-motion. This is described later in FIG. 9.

Then, the server controller 320 creates a notification message that the washing apparatus 100, the drying apparatus 200, etc. may output. When the notification message is transmitted to the washing apparatus 100 and the drying apparatus 200, a speaker or a LCD display within each of the washing apparatus 100 and the drying apparatus 200 may output the message in a voice or text manner. Alternatively, the management server 300 may transmit the notification message to the sound source server 400 so that the sound source server 400 may create a predetermined sound source based on the notification message.

Alternatively, the notification message may be a file composed of a sound source. In this case, the washing apparatus 100, the drying apparatus 200, etc. may play the sound source file included in the notification message to provide the voice guidance to the user.

Furthermore, the server controller 320 may check an operating status of each of the washing apparatus 100 and the drying apparatus 200. The server controller 320 may check the operating status thereof by checking a status message periodically transmitted from each of the washing apparatus 100 and the drying apparatus 200, or by checking whether communication of the communication unit with each of the washing apparatus 100 and the drying apparatus 200 is maintained.

Then, the server communication unit 310 may transmit a message (guide information, etc.) to the user terminal 500 to instruct the user terminal 500 to control the washing apparatus 100 and the drying apparatus 200 or to control the operating status or the function of each of the washing apparatus 100 and the drying apparatus 200.

The server storage 330 may cumulatively store therein tumble motion-related data previously transmitted from multiple washing apparatuses and drying apparatuses.

The server controller 320 may include a machine learning module. The server controller 320 may determine a type of the laundry using input data thereto. The machine learning module may be configured to receive the data transmitted from the washing apparatus and then to output at least one of a probability that the laundry input to the washing apparatus is the functional clothing or the type of the laundry.

According to one embodiment of the present disclosure, an output result from the machine learning module may be constructed as shown in Table 1 as set forth below. The table 1 shows a calculating result of the probability that the input laundry is the functional clothing and the probability that the input laundry is clothing suitable for the standard course.

**Table 1**

| Identification information of washing apparatus | Probability that input laundry is functional clothing | Probability that input laundry is clothing suitable for standard course |
|---|---|---|
| Washer_012 | 98% | 2% |
| Washer_015 | 30% | 70% |

According to one embodiment of the present disclosure, an output result from the machine learning module may be constructed as shown in Table 2 as set forth below. This is a scheme in which only one result is output.

**Table 2**

| Identification information of washing apparatus | Identification result |
|---|---|
| Washer_012 | Functional clothing |
| Washer_015 | Clothing suitable for standard course |

The management server 300 in FIG. 4 may implement the process of the above-described embodiment. For example, the server communication unit 310 receives the data detected by the washing apparatus 100 in performing the tumble-motion after the laundry has been input into the washing apparatus 100 from the washing apparatus 100 in S1 and S23, and the server controller 320 determines whether the input laundry is the functional clothing based on the received data in S2 and S24. The server controller 320 controls the guide process of guiding the washing apparatus based on a comparing result between the set course information to the washing apparatus and the determination result in S4, S14, and S27.

In one embodiment of the method for controlling the guide process, as shown in FIG. 1, the server controller 320 creates a request message requesting the sound source server 400 to output the sound source to the washing apparatus. Then, the server communication unit 310 transmits the request message to the sound source server 400. Then, the sound source server 400 creates a sound source file based on the request message and transmits a notification message including the sound source file to the washing apparatus 100 in S4.

In another embodiment of the method for controlling the guide process, as shown in FIG. 2, the server controller 320 creates a notification message to be output from the washing apparatus 100. Then, the server communication unit 310 transmits the notification message to the washing apparatus 100 in S14.

Further, the server communication unit 310 may receive the captured image of the laundry from the washing apparatus 100. Then, the server controller 320 determines whether the input laundry is the functional clothing, based on the received image. The server controller 320 may check the accuracy of the previous determination result of S24 based on the determination result using the image.

In FIGS. 1 and 2, the server controller 320 may identify the drying apparatus 200 linked to the washing apparatus 100 and control the guide process for guiding the drying apparatus based on the determination result of S24. The controlling scheme of the controlling the guide process includes a scheme in S9b in which the sound source server 400 transmits the voice file for voice guidance, as shown in FIG. 1, or a scheme in S19 in which the server 300 transmits the notification message, as shown in FIG. 2.

In response to S7 in FIG. 1 and FIG. 2, the server controller 320 creates the pushing message to be transmitted to the user terminal 500 linked to the washing apparatus 100, and the server communication unit 310 sends the pushing message to the user terminal 500.

FIG. 5 is a block diagram showing a general configuration of a user terminal according to an embodiment of the present disclosure. The user terminal 500 may be referred to as a client device, etc.

Referring to FIG. 5, the user terminal 500 may include a terminal communication unit 510, a terminal controller 520, and a terminal interface 530. The user terminal 500 may be linked with the washing apparatus 100 and the drying apparatus 200, so that the user terminal 500 may check a current status of each of the washing apparatus 100 and the drying apparatus 200.

The terminal communication unit 510 may communicate with the management server 300. The terminal communication unit 510 may perform communication using a wired scheme and/or a wireless scheme. The wireless scheme may include a short-range wireless communication scheme and a long-range wireless communication scheme.

The terminal controller 520 may control the terminal communication unit 510 and the terminal interface 530.

Although not shown in the drawing, the terminal controller 520 may include a processor and an internal memory. The internal memory may store therein a terminal application for managing the home appliances 100 and 200. The processor may execute the terminal application.

The terminal interface 530 may output an execution screen of the terminal application. In particular, the terminal interface 530 may visually and/or audibly output information or a guide message related to performance of a function of each of the washing apparatus 100 and the drying apparatus 200.

The terminal communication unit 510 may transmit and receive a message to and from the management server 300. Further, the terminal communication unit 510 may receive status information of the washing apparatus 100 and the drying apparatus 200 linked to the user terminal from the management server 300.

The user terminal 500 linked to the washing apparatus 100/drying apparatus 200 may receive a notification message for course setting guidance related to the functional clothing washing from the management server 300 while communicating with the management server 300. In this regard, the user terminal 500 may output the received notification message as a pushing message in a form of a pop-up.

After the terminal interface 530 outputs the notification message, the terminal communication unit 510 may transmit a result of whether the user has checked the notification message to the management server 300.

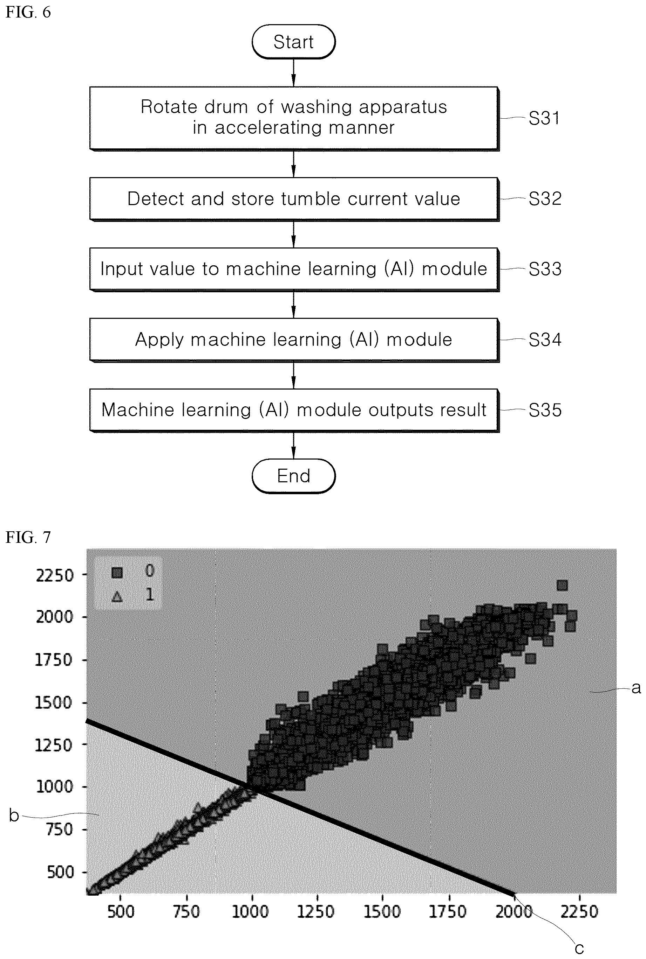

FIG. 6 is a diagram showing a process in which the management server determines whether laundry input to the washing apparatus is functional clothing according to an embodiment of the present disclosure. The washing apparatus 100 rotates a drum in an accelerating manner in S31. The washing apparatus 100 detects and stores a current value while performing the tumble motion. The current value may include three calculated current values. The washing apparatus 100 performs the tumble-motion and may calculate the tumble-motion starting current value, the tumble-motion maintaining current average value, and the tumble-motion maintaining current variance value at a certain point in time (e.g., K times for initial N minutes, or P times for an entire course of M hours, etc.).

The calculated values are transmitted to the management server 300, and the management server 300 inputs each of the received values (data) into the machine learning (artificial intelligence) module in S33. The server controller 320 of the management server 300 may include the artificial intelligence module, and the aforementioned data is input to the machine learning module.

The machine learning module determines the type of the laundry, for example, the type of the cloth, from the received data in S34, and in one embodiment, the determination may be performed based on binary classification. Furthermore, the management server 300 may apply any at least one of Decision Tree, Random Forest, and SVM (Support Vector Machine) among detailed binary classification models. The management server 300 may apply one of the three detailed models or set different weights to two or more results based on model characteristics of the washing apparatus 100 or various variables.

The machine learning module of the server controller 320 outputs a result corresponding to the received data in S35. In one embodiment, the result is a determination result of whether the laundry input into the washing tub is the functional clothing or the clothing suitable for the standard course. Furthermore, the result of S35 includes a result of determining whether the functional clothing is suitable for the wool course or the lingerie course or the blanket course.

An outputting scheme of the result of S35 includes a probability-based scheme and a result output scheme. The probability-based scheme is a scheme of outputting the probability that the input laundry is the functional clothing and the probability that the input laundry is clothing suitable for the standard course. The result output scheme outputs information about the input laundry is the functional clothing or the clothing suitable for the standard course.

Alternatively, in a more detailed manner, information about the functional clothing corresponding to each course may be output. In this case, detailed information about the laundry rather than the clothing suitable for the standard course may be output. For example, the detailed information about a specific type of the input laundry such as wool, lingerie, blankets, dolls, hiking clothes, etc. may be output.

FIG. 7 is a diagram showing a result obtained by a machine learning module of the management server performing machine learning according to one embodiment of the present disclosure. FIG. 7 shows a result of applying SVM to classify the laundry into the clothing suitable for the standard course and the functional clothing. In the graph, a line segment "c" separates an area "a" where data marked 0 is concentrated, and an area "b" where data marked 1 is concentrated from each other. FIG. 7 shows a result of applying a linear model, and the management server 300 determines whether the laundry is the functional clothing, based on a mathematical equation defined based on the line segment "c" in FIG. 7.

Based on the machine learning result on the data transmitted from the washing apparatus 100, the management server 300 may determine the laundry in the area "b" as the functional clothing and the laundry in the area "a" as the clothing suitable for the standard course.

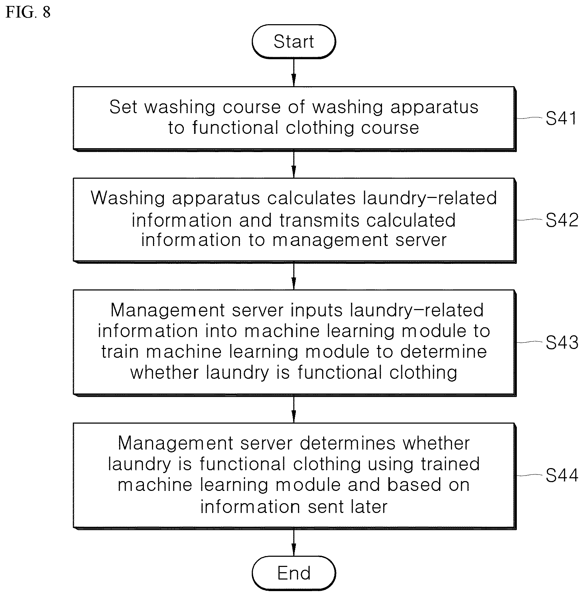

FIG. 8 is a diagram showing a process in which the management server trains the machine learning module according to an embodiment of the present disclosure. When the server communication unit 310 receives course setting information about the functional clothing from a plurality of washing apparatuses 100 and the data detected by the washing apparatus 100 during the tumble-motion from the washing apparatus 100, the machine learning module of the server controller 320 may perform the machine learning on the course setting information and the received data. FIG. 8 shows this process.

The management server 300 may train the machine learning module for determining whether the input laundry is the functional clothing using data generated while the customer uses the washing apparatus in order to collect training data. In other words, when the user directly selects a functional clothing washing course (wash tower provision, downloaded washing course type), the data calculated by the washing apparatus 100 based on the input laundry may be used as data in washing the functional clothing.

In particular, an accuracy of data may increase when the functional clothing is washed at a small quantity. Thus, the small quantity-functional clothing course may be set. In this case, when the calculated data is received from the washing apparatus, the management server may train the machine learning module under the increased accuracy of the data. As a result, the machine learning module of the management server 300 may be trained to increase the accuracy of the determination whether the input laundry is the functional clothing.

The washing apparatus detects laundry movement (torque current change trend) based on a laundry quality and a laundry amount, and transmits the detected laundry movement as data to the management server 300. Thus, the management server 300 may learn the detected laundry movement. This will be described below.

The user sets the washing course of the washing apparatus 100 to the functional clothing course in S41. This means that the user intentionally sets the washing course of the washing apparatus to the functional clothing course. Thus, it is very likely that the input laundry belongs to the functional clothing. Accordingly, the washing apparatus 100 calculates the input laundry-related information and transmits the calculated information to the management server in S42.

The input laundry-related information includes image data of the laundry captured by a camera in the washing apparatus 100, characteristics of the current calculated during the tumble-motion of the washing apparatus 100, etc. Furthermore, in order that the server 300 accurately performs the learning based on each manufacturing model of the washing apparatus 100, the washing apparatus 100 may transmit identification information of the washing apparatus and model information of the washing apparatus to the management server 300.

The management server 300 may input the laundry-related information into the machine learning module to train the machine learning module to determine whether the input laundry is the functional clothing in S43. In one embodiment, the machine learning module may learn a correlation between the training data obtained when the washing course is set to the functional clothing course and the training data obtained when the washing course is set to the standard course to allow features of each data to be used efficiently. As described above, the data includes the tumble-motion starting current value, the tumble-motion maintaining current average value, and the tumble-motion maintaining current variance value at a specific time point during the tumble-motion after the laundry has been loaded into the washing apparatus 100.

The machine learning module may apply the binary classification model for learning to determine whether the input laundry is the functional clothing or the clothing suitable for the standard course, based on these data. In this regard, the binary classification model may include at least one of three detailed models: decision tree/random forest/SVM.

In particular, machine learning module may apply each of the above detailed models based on the manufacturing model of the washing apparatus. Thus, a detailed model with higher accuracy may be applied thereto.

Under a process shown in FIG. 8, the machine learning module may apply a linear classification model to determine whether the input laundry is the functional clothing or the clothing suitable for the standard course, based on the linear classification model.

Furthermore, when the functional clothing may be sub-classified into various types based on the clothing material. Thus, the management server 300 may apply a laundry classification scheme such that the functional clothing may be sub-classified into functional clothing 1, functional clothing 2, and clothing suitable for the standard course.

FIG. 9 is a diagram showing a point in time when the management server collects data according to one embodiment of the present disclosure.

The washing apparatus 100 may calculate data at specific time points T1 to T6 elapsed from a time point when the washing starts. Alternatively, the data calculated in periods P1 to P5 respectively defined between adjacent ones of the specific points in time T1 to T6 may be collected to calculate a representative value of a corresponding period.

For example, at a specific point in time or in a specific period, the washing apparatus 100 rotates the drum in the accelerating manner in the washing cycle and detects the laundry movement (current change trend) based on the laundry quality and the laundry amount. Then, the washing apparatus 100 transmits values related to the laundry movement, such as the tumble-motion starting current value, the tumble-motion maintaining current average value, and the tumble-motion maintaining current variance value to the management server 300.

The transmitted value is input to the server controller 320 of the management server 300. The server controller 320 determines the type of the laundry using the machine learning module and outputs information about whether the laundry input into the washing tub is the functional clothing.

FIG. 10 is a diagram showing a configuration in which a machine learning module of a server controller applies three classification schemes to produce an optimal result according to an embodiment of the present disclosure.

The machine learning module that has received the data sensed by the washing apparatus 100 may output at least one of the probability that the input laundry is the functional clothing or the type of laundry based on a binary classification scheme. In this regard, depending on the model of the washing apparatus 100, the server controller 320 may calculate determination result by applying different weights to the decision tree, random forest, and SVM (Support Machine Vector), which are binary classification scheme.

For example, in an existing learning process, it is assumed that when the washing apparatus has a model "A", the accuracy of the determination result is high when using the decision tree as the binary classification scheme. Thus, when the server controller 320 determines whether the laundry put into the washing apparatus of the "A" model is the functional clothing, the server controller 320 first applies the "decision tree" scheme or uses the determination result using the "decision tree" as the determination result of S24 in FIG. 3.

In the same manner, in the existing learning process, it is assumed that when the washing apparatus has a model "B", the accuracy of the determination result is high when a 30% weight is applied to the determination result obtained using the random forest and a 70% weight is applied to the determination result obtained using SVM and then the both determination results subjected to the application of the weights are added to each other. Thus, when the server controller 320 determines whether the laundry put into the washing apparatus of the "B" model is the functional clothing, the server controller 320 may employ the determination result calculated by applying the above different weights to the "Random Forest" and "SVM" schemes, respectively, as the determination result of S24 in FIG. 3.

The Table 3 shows that the operation of the machine learning module is set to be different from each other based on the different washing apparatus models according to an embodiment of the present disclosure. The mapping of the table 3 may be stored in the server storage 330.

**Table 3**

| Washing apparatus models | Machine learning module |
|---|---|
| Washer_Model_A | (Decision_Tree, 100) |
| Washer_Model_B | (Random Forest, 30) & (SVM, 70) |

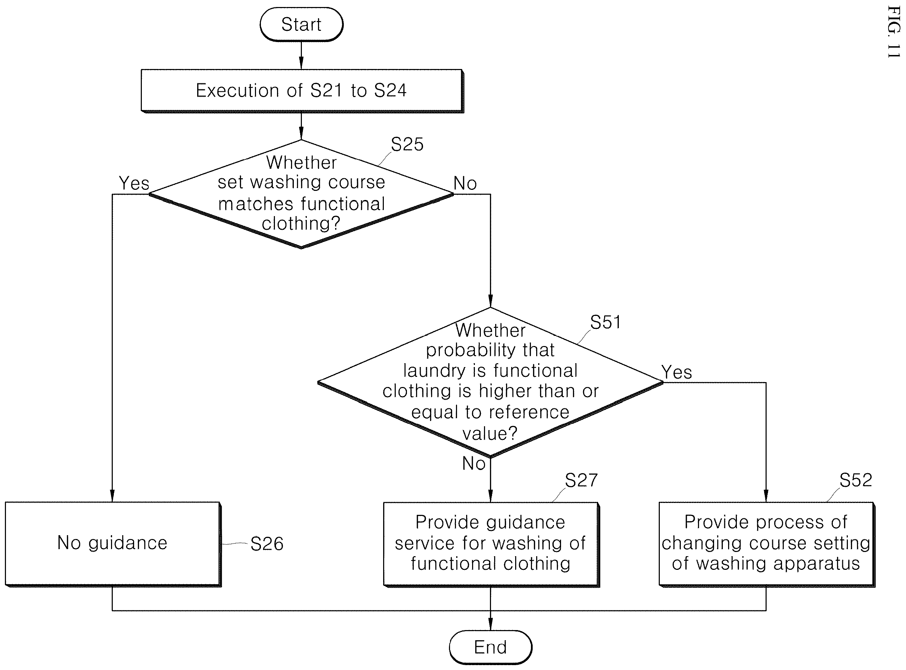

FIG. 11 is a diagram showing a process in which the management server changes a course setting of the washing apparatus according to an embodiment of the present disclosure. This process is performed after S24 in FIG. 3.

The server controller 320 of the management server 300 determines whether the probability that the laundry input to the washing apparatus is the functional clothing is greater than or equal to a reference value in S51. For example, it may be assumed that the reference value is 80%.

When the probability that the laundry input into the washing tub is the functional clothing is 75% (smaller than the reference value), the management server 300 may provide a guidance service regarding the functional clothing washing to the washing apparatus 100 and the user terminal 500 in S27. However, when the probability that the laundry input into the washing tub is the functional clothing is 90% (higher than the reference value), the management server 300 performs a process of changing the course setting of the washing apparatus 100 in S52.

For example, the server controller 320 includes an instruction for changing the course setting to the functional clothing course in the notification message to be transmitted to the washing apparatus 100. Then, the washing apparatus 100 which has received the notification message, changes the previous standard course to the functional clothing course. Furthermore, the washing apparatus 100 or the user terminal 500 may notify the user of this change process using a voice/pushing message.

In summary, when the server controller 320 determines that the probability that the input laundry is the functional clothing is greater than the reference value, the server controller creates the instruction to change the course set to the washing apparatus 100 to the functional clothing course. Then, the server communication unit 310 transmits the notification message including the instruction to the washing apparatus 100 to control the washing apparatus 100 to change the course setting.

The above-mentioned reference value may be set in various ways. The reference value may be set to be different from each other based on the different models of the washing apparatus, or may be set based on the behavior pattern of the user of the washing apparatus. For example, in the past, then, the number of times the user of the washing apparatus injected the functional clothing to the washing apparatus, and then, changed the course after receiving the information guiding the course change from the management server 300 or the sound source server 400 may be stored cumulatively in the server storage 330.

When the number of times the user changes the course according to the guided information increases, the user has a behavior characteristic of changing the course of the washing apparatus according to the guide. Thus, the management server 300 may set the aforementioned reference value to be low based on the cumulative number of times over a certain period of time.

That is, the management server 300 sets the reference value to 90% for a first user who has received the guide for the first time. Then, the management server 300 transmits the instruction to automatically change the course setting to the first user's washing apparatus 100 only when the probability that the laundry input into the washing tub is the functional clothing is greater than or equal to 90%.

Meanwhile, the management server 300 sets the reference value to 75% for a second user who has received multiple guides and has changed the course setting a large number of times. Then, the management server 300 transmits the instruction to automatically change the course setting to the second user's washing apparatus 100 when the probability that the laundry input into the washing tub is the functional clothing is higher than or equal to 75%.

Since the course setting is automatically changed to suit the user corresponding to the guide information, the management server 300 may provide a change process of the guide information and the course setting in the customized manner to the user.

According to the above-described embodiment, when the user puts the functional clothing into the washing apparatus 100 after setting the standard course the washing apparatus, the washing apparatus 100 may guide the user to use or set and use the functional clothing course. When it is determined that the input laundry is the functional clothing, the management server 300 may perform the guide process so that the washing apparatus 100 provides the guidance service to set or use the functional clothing course to prevent damage to the laundry.

When the laundry is inserted in the washing tub, the washing apparatus 100 transmits the various data calculated in the tumble-motion to the management server 300, so that the management server 300 may determine whether the inserted laundry is the functional clothing based on the various data. The management server 300 may determine whether the input laundry is the functional clothing using the machine learning module including the binary classification model.

In the guide process, the guidance service to guide the user to use or set the functional clothing course may include a scheme where the product guides the user through a voice notification or a scheme where a pushing message is sent to the user terminal to guide the user. The user may check the message from the product or the user terminal and may change the course setting and prevent the damage to the laundry.

Furthermore, the above-described embodiment may be applied to a situation in which the current washing course mismatches each of multiple courses. In other words, the functional clothing may be sub-categorized into wool, lingerie, padding, blankets, etc. Furthermore, for accuracy of the determination, the management server 300 may recognize the type of the laundry based on a recognizing result of the laundry image or the weight of the laundry.

An embodiment of the present disclosure in which all the components are combined with each other or operate in combination with each other has been described. However, the present disclosure is not necessarily limited to this embodiment. Within the scope of the purpose of the present disclosure, at least two of all components may be selectively combined with other or may operate in the selectively combined manner with other. Furthermore, each of the components may be implemented as an independent hardware. However, some or all of the components may be selectively combined with each other and thus may be implemented using a computer program with a program module to perform some or all of the functions combined in one or more pieces of hardware. The codes and code segments that constitute the computer program may be easily deduced by a person skilled in the art from the present disclosure. The computer program may be stored in computer readable media and read and executed by a computer, thereby implementing the method of the present disclosure. The storage media for storing the computer program may include storage media including magnetic recording media, optical recording media, and semiconductor recording devices. Additionally, the computer program implementing an embodiment of the present disclosure includes a program module that is transmitted in real time through an external device.

The above description focuses on the embodiment of the present disclosure, but various changes or modifications may be made thereto at the level of a person skilled in the art. Therefore, it may be understood that such changes and modifications are included within the scope of the present disclosure as long as they do not go beyond the scope of the present disclosure.

### Reference numerals

| | |
|---|---|
| 100: | Washing apparatus 200: Drying apparatus |
| 300: | Management server 500: User terminal |

## Claims

1. A method for guiding a washing course, the method comprising:
receiving, by a server communication unit of a management server, data from a washing apparatus, wherein after laundry is input to the washing apparatus, the washing apparatus performs a tumble-motion of the laundry to detect the data during the tumble-motion of the laundry;
determining, by a server controller of the management server, whether the input laundry is functional clothing, based on the received data;
comparing, by the server controller of the management server, set course information of the washing apparatus with the determination result; and
controlling, by the server controller of the management server, a guide process for guiding the washing apparatus, based on the comparing result.

2. The method of claim 1, wherein the controlling of the guide process includes:
creating, by the server controller of the management server, a notification message to be output from the washing apparatus; and
transmitting, by the server communication unit, the notification message to the washing apparatus.

3. The method of claim 1, wherein the controlling of the guide process includes:
creating, by the server controller, a request message requesting creation of a sound source to be outputted from the washing apparatus;
transmitting, the server communication unit, the request message to a sound source server;
creating, by the sound source server, a sound source file based on the request message; and
transmitting, by the sound source server, the notification message including the sound source file to the washing apparatus.

4. The method of claim 1, wherein the data includes a tumble-motion starting current value, a tumble-motion maintaining current average value, and a tumble-motion maintaining current variance value calculated by the washing apparatus during the tumble-motion.

5. The method of claim 1, wherein the data is calculated by the washing apparatus in at least two time points or for at least two time periods during the tumble-motion.

6. The method of claim 1, wherein the server controller includes a machine learning module,
wherein the method further comprises outputting, by the machine learning module, at least one of a probability that the input laundry is the functional clothing or a type of the laundry, based on the received data.

7. The method of claim 6, further comprising, by the machine learning module, outputting at least one of the probability that the input laundry is the functional clothing or the type of the laundry using a binary classification scheme.

8. The method of claim 7, wherein the binary classification scheme includes at least one of decision tree, random forest, and SVM (Support Machine Vector),
wherein the method further comprises, by the server controller, applying each weight to a result of using each of the decision tree, the random forest, and the SVM, based on a model of the washing apparatus.

9. The method of claim 6, further comprising,
receiving, by the server communication unit, from each of a plurality of washing apparatuses, course setting information about the functional clothing, and the data detected by each of the washing apparatuses during the tumble-motion; and
performing, by the machine learning module, learning of the course setting information and the received data.

10. The method of claim 1, further comprising, by the server communication unit, receiving a captured image of the laundry from the washing apparatus,
wherein the determining of whether the input laundry is the functional clothing further includes determining, by the server controller, whether the input laundry is the functional clothing, based on the image.

11. The method of claim 1, further comprising:
identifying, by the server controller, a drying apparatus linked to the washing apparatus; and
controlling, by the server controller, a guide process for guiding the drying apparatus based on the determination result.

12. The method of claim 1, further comprising:
creating, by the server controller, a pushing message to be transmitted to a user terminal linked to the washing apparatus; and
transmitting, by the server communication unit, the pushing message to the user terminal.

13. The method of claim 1, wherein the controlling of the guide process includes:
when a probability that the input laundry is the functional clothing is higher than or equal to a reference value, creating, by the server controller, an instruction to change a washing course of the laundry set in the washing apparatus to a functional clothing washing course; and
transmitting, by the server communication unit, a notification message including the instruction to the washing apparatus.

14. A management server for guiding a washing course, the management server comprising:
a server communication unit configured to receive data from a washing apparatus, wherein after laundry is input to the washing apparatus, the washing apparatus performs a tumble-motion of the laundry to detect the data during the tumble-motion of the laundry; and
a server controller configured to:
determine whether the input laundry is functional clothing, based on the received data;
compare set course information of the washing apparatus with the determination result; and
control a guide process for guiding the washing apparatus, based on the comparing result.

15. The management server of claim 14, wherein in order to control the guide process, the server controller is configured to create a notification message to be output from the washing apparatus, and the server communication unit is configured to transmit the notification message to the washing apparatus.

16. The management server of claim 14, wherein in order to control the guide process, the server controller is configured to create a request message requesting creation of a sound source to be output from the washing apparatus, and the server communication unit is configured to transmit the request message to a sound source server,
wherein the sound source server is configured to create a sound source file based on the request message, and to transmit a notification message including the sound source file to the washing apparatus.

17. The management server of claim 14, wherein the data includes a tumble-motion starting current value, a tumble-motion maintaining current average value, and a tumble-motion maintaining current variance value calculated by the washing apparatus during the tumble-motion.

18. The management server of claim 14, wherein the data is calculated by the washing apparatus in at least two time points or for at least two time periods during the tumble-motion.

19. The management server of claim 14, wherein the server controller includes a machine learning module,
wherein the machine learning module is configured to receive the data and to output at least one of a probability that the input laundry is the functional clothing or a type of the laundry, based on the received data.

20. The management server of claim 14, wherein the server communication unit is configured to receive a captured image of the laundry from the washing apparatus,
wherein the server controller is configured to determine whether the input laundry is the functional clothing based on the image.

21. The management server of claim 14, wherein the server controller is configured to identify a drying apparatus linked to the washing apparatus,
wherein the server controller is configured to control a guide process for guiding the drying apparatus based on the determination result.

22. The management server of claim 14, wherein the server controller is configured to create a pushing message to be transmitted to a user terminal linked to the washing apparatus, and then the server communication unit is configured to transmit the pushing message to the user terminal.

23. The management server of claim 14, wherein in order to control the guide process, the server controller is configured to create an instruction to change a washing course set in the washing apparatus to a functional clothing course when a probability that the input laundry is the functional clothing is greater than or equal to a reference value,
wherein the server communication unit is configured to transmit a notification message including the instruction to the washing apparatus.
